# EUROPEAN PATENT APPLICATION

(11) **EP 4 410 611 A1**
(43) Date of publication of application: **07.08.2024**
(21) Application number: 24154655.5
(22) Date of filing: 30.01.2024
(51) Int. Cl.: B60T 1/06, B60T 1/02

(54) **BRAKING DEVICE AND METHOD**

(30) Priority: 03.02.2023 IT 202300001770
(71) Applicant: Donati, Vittorio, 16156 Genova (GE) (IT); Artini, Giuseppe, 16143 Genova (GE) (IT)
(72) Inventor: Donati, Vittorio, 16156 Genova (GE) (IT); Artini, Giuseppe, 16143 Genova (GE) (IT)
(74) Representative: Bonatto, Marco

(57) **Abstract**

The braking device (**1**, **1'**) according to the invention comprises a main shaft (**3**, **3'**), a secondary shaft (**5**, **5'**), a first (**7**, **7'**), a second (**9**, **9'**), a third (**11**, **11'**) and a fourth shaped track (**13**, **13'**). The main shaft (**3**, **3'**) is arranged to rotate on itself around a main rotation axis (**AR1**). The secondary shaft (**5'**) is arranged to rotate on itself around a secondary rotation axis (**AR2**) and to rotate around the main rotation axis (**AR1**). The first (7) and third shaped track (**11**) are arranged to operate the second (9) and fourth shaped track (**13**) respectively. The fourth shaped track (**13**, **13'**) is arranged to vary its position in relation to the first shaped track (**7**, **7'**) so as to slow down and/or hinder the rotation of the other shaped tracks and brake the main shaft (3, 3').

## Description

### Field of the invention

The present invention relates to a braking mechanism and method that can be used, for example, to gradually slow down, or block, the rotation of a shaft by using relatively little friction between mechanical parts.

A mechanism and method according to the present invention may be advantageously applied in the field of general machine construction, for example as an ordinary or safety brake on railway carriages, railway locomotives or other railway vehicles, on ships or other vessels, on engines for cable cars or cable railways, on machine tools or industrial plants.

### Prior art

The vast majority of mechanical brakes currently used to brake shafts or other rotating bodies uses pads or shoes coated with a friction material which slide either directly against the shaft to be stopped, or in any case to be braked, or against a disc keyed to the shaft to be braked.

To brake the shaft or other rotating body, this type of mechanical brake exclusively, or predominantly, exploits the sliding friction, which is usually increased by increasing the pressure of the brake shoes or pads against the shaft or other rotating body being braked by means of servomechanisms or other actuators powerful enough to supply the required braking force.

One object of the present invention is to provide a braking device that is improved over known mechanical brakes, for example because it is more reliable and effective.

### Summary of the invention

This object is achieved, according to the first aspect of the present invention, with a braking device having the characteristics according to claim **1**.

In a braking device according to a particular embodiment of the present invention, the secondary shaft (**5**, **5**') is arranged to rotate on itself around a secondary rotation axis (**AR2**) substantially transverse to the main rotation axis (**AR1**) and having an inclination (**α**) with respect to the main rotation axis (**AR1**) equal to or greater than **10** degrees and for example, between **10-45** degrees, between **10-30** degrees, between **10-20** degrees or between **10-15** degrees.

In a second aspect of the invention, this object is achieved with a braking method having the features according to claim **12.**

Further features of the invention are the subject-matter of the dependent claims.

The advantages attainable with the present invention shall become more readily apparent, to the person skilled in the art, by the following detailed description of a particular, non-limiting example of embodiment, illustrated with reference to the following schematic figures.

### List of Figures

Figure **1** shows in a front view a kinematic diagram of a braking device according to a first embodiment of the present invention;
Figure **2** shows a perspective view of a braking device according to a first embodiment of the present invention implementing the kinematic diagram of Figure **1**;
Figure **3** shows a front view of some components of the braking device of Figure **2****;**
Figure **4** shows a front view, partially in section according to a section plane passing through the rotation axes of the main and secondary shafts, of the braking device components of Figure **3****;**
Figure **5** shows a perspective view of a braking device according to a second embodiment of the present invention.

### Detailed description

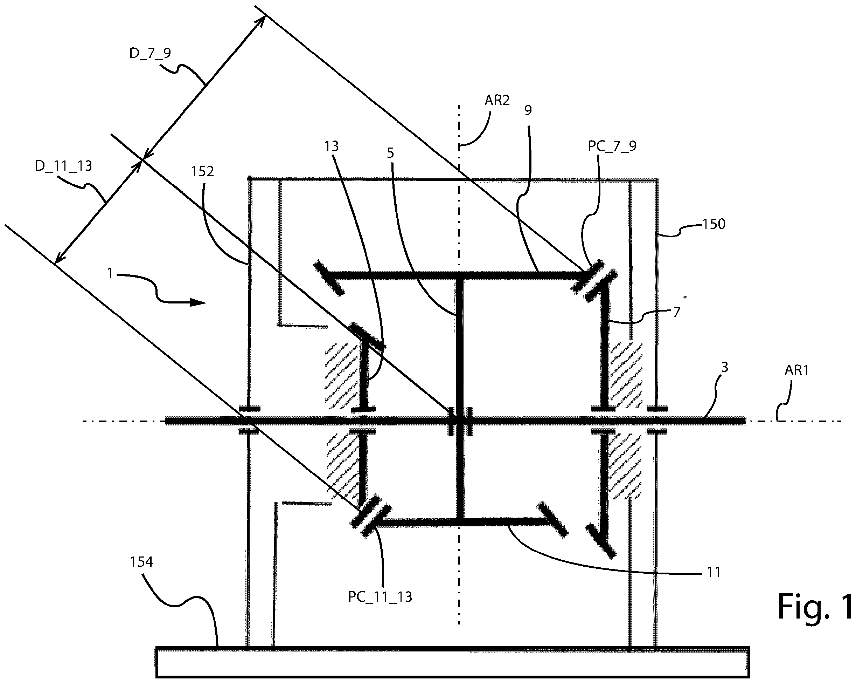

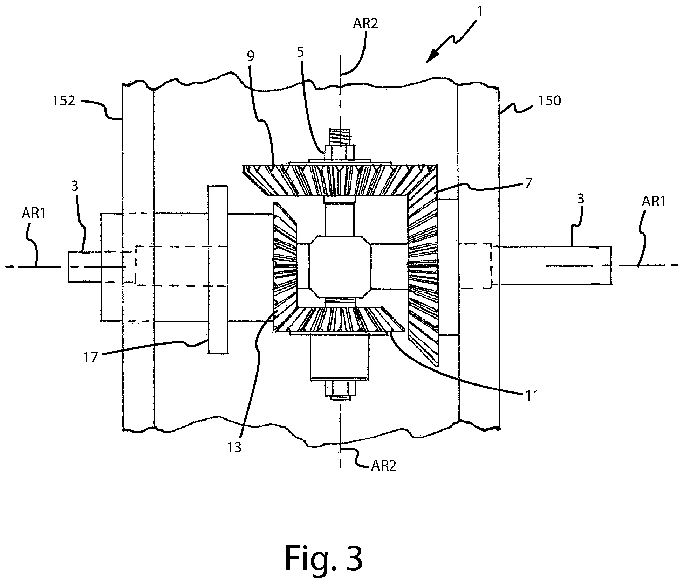

Figures **1-4** relate to a braking device according to a first particular embodiment of the invention, referred to as a whole by **1.**

The device **1** comprises a main shaft **3,** a secondary shaft **5,** at least a first **7,** a second **9,** a third **11** and a fourth shaped track **13** and any further shaped tracks (not shown).

A shaped track can be, for example, a toothing of a gear wheel or an appropriate cam profile, as will be explained in more detail below.

The main shaft **3** is arranged to rotate on itself around a main rotation axis **AR1.**

The secondary shaft **5** is arranged to rotate on itself around a secondary rotation axis **AR2** substantially perpendicular or otherwise transverse to the main rotation axis **AR1,** and is further arranged to rotate around the main rotation axis **AR1.**

For this purpose advantageously the secondary shaft **5** is fixed to the main shaft **3** so as to be axially constrained to the latter and to be able to transmit a drive or resistant torque to the latter when it rotates around it by varying its orientation in space, for example by moving in an ideal plane perpendicular to the main rotation axis **AR1.**

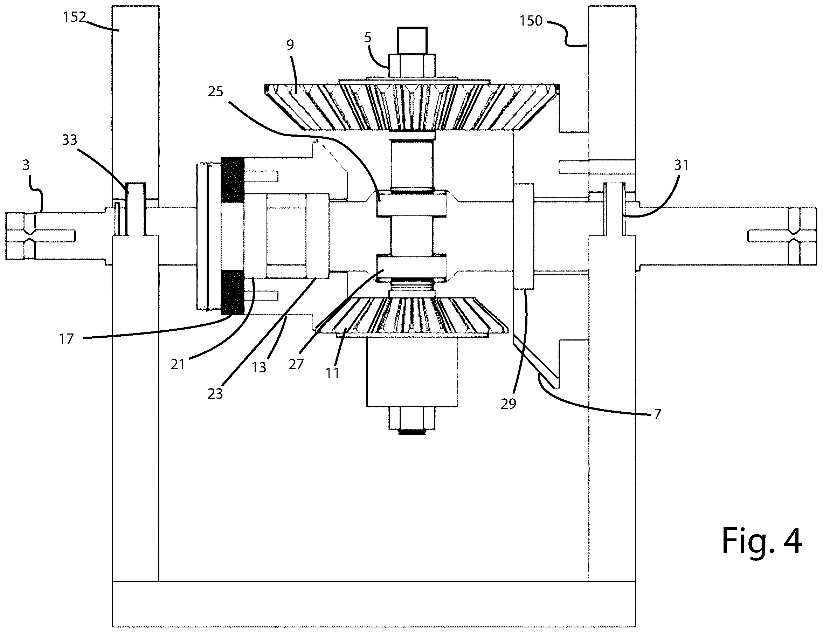

Still for this purpose, the secondary shaft **5** is mounted on one or more bearings **25, 27** which allow it to rotate on itself relative to the main shaft **3** (Figure **4**)**.**

The secondary shaft **5** can for example be inserted through the bearings **25** and/or **27.**

Such bearings can, for example, be inserted into appropriate seats formed in the main shaft **3.**

The bearings **21, 23, 25, 27, 29, 31** can be rolling or plain bearings.

Still for this purpose the secondary shaft **5** may for example pass through a hole or other through opening formed in the main shaft **3.**

The second **9** and/or the third shaped track **11** are fixed integrally to the secondary shaft **5** so as to rotate on themselves around the secondary rotation axis **AR2.**

The first shaped track **7** is arranged to operate the second shaped track **9** and vice versa.

The third shaped track **11** is arranged to operate the fourth shaped track **13** and vice versa.

At least one pair of said shaped tracks, i.e., two of the various shaped tracks of the braking device **1,** engage with each other so as to roll on or against each other.

The fourth shaped track **13** is arranged to vary its position in space with respect to the first shaped track **7** so as to slow down and/or hinder -that is, making it more difficult, though not necessarily completely preventing- the rotation and rolling of said pair of said shaped tracks on or against each other.

Obviously, the fourth shaped track **13** can be arranged to vary its position in space with respect to the first shaped track **7** so as to completely block the rotation and rolling of said pair of said shaped tracks on or against each other.

As in the embodiments of Figures **1-4** preferably two or more of the shaped tracks possibly present in the device **1** -not shown- and more preferably all of the shaped tracks possibly present in the device **1,** and in particular the first **7,** the second **9,** the third **11** the fourth shaped track **13** preferably form toothed profiles of gear wheels but in other embodiments not shown they may be for example cam profiles -possibly arranged to engage with each other by rolling on or against each other without rubbing- or friction wheel profiles or friction wheel arches.

More preferably the first **7,** the second **9,** the third **11** the fourth **13** and the further shaped tracks possibly present in the device **1** -not shown- are preferably toothed profiles of bevel gear wheels (Figure **1-4**)

Preferably the first shaped track **7** is engaged with the second shaped track **9** rolling on or against the latter.

Preferably the third shaped track **11** is engaged with the fourth shaped track **9** rolling on or against the latter.

Preferably the second **9** and the third shaped track **11** are fixed integrally to the secondary shaft **5** so as to rotate on themselves around the secondary rotation axis **AR2.**

Preferably the second **9** and the third gear wheel **11** are fixed integrally to the secondary shaft **5** so as to rotate on themselves around the secondary rotation axis **AR2 .**

For this purpose, the second **9** and the third gear wheel **11** can be rigidly keyed to the output shaft without being able to substantially rotate with respect to each other around the axis **AR2.**

Preferably the first gear wheel **7** is meshed with the second gear wheel **9.**

Preferably the third gear wheel **11** is meshed with the fourth gear wheel **13.**

Preferably, the fourth shaped track **13** is arranged to vary its angular position with respect to the first shaped track **7** for example by rotating on itself at least in relation to the first shaped track **7** and possibly also about the main rotation axis **AR1** so as to slow down and/or hinder the rotation and rolling of the first shaped track **7** with respect to the second shaped track **9** and the rotation and rolling of the third shaped track **11** with respect to the fourth shaped track **13.**

For this purpose, the fourth shaped track **13** can be mounted on one or more bearings **21, 23** which in turn can be fitted onto the main shaft **3.**

Still for this purpose, the one or more bearings **21, 23** can be inserted into the respective seats inside the piece on which the fourth shaped track **13** (Figure **4**) is obtained.

Preferably, the fourth gear wheel **13** is arranged to vary its angular position with respect to the first gear wheel **7** for example by rotating on itself at least in relation to the first gear wheel **7** and preferably also around the main rotation axis **AR1** so as to slow down and/or hinder the rotation and rolling of the first gear wheel **7** with respect to the second gear wheel **9** and/or the rotation and rolling of the third gear wheel **11** with respect to the fourth gear wheel **13.**

Preferably the first **7** and/or the fourth shaped track **13** are coaxial with the main shaft **3** and are arranged to rotate on themselves with respect to the main rotation axis **AR1** and around the main rotation axis **AR1.**

Preferably the first **7** and/or the fourth gear wheel **13** are coaxial with the main shaft **3** and arranged to rotate on themselves with respect to the main rotation axis **AR1** and around the main rotation axis **AR1.**

Preferably the second **9, 9'** and/or the third gear wheel or other shaped track **11, 11'** are coaxial with the secondary shaft **5** and arranged to rotate on themselves with respect to the secondary rotation axis **AR2** and around the secondary rotation axis **AR2.**

The main shaft **3** can be mounted and held in place in the space by appropriate rolling or plain bearings **31, 33** (Figure **4**).

Preferably, the braking device **1** comprises a supporting frame **15** which may in turn comprise a first 150 and a second side **152,** each of which may in turn comprise a wall (Figure **1-3**).

The above-mentioned bearings **31**, **33** can be fixed and held in place in space one at the first side **150** and the other at the second side **152.**

The main shaft **3** can pass through one or both sides **150, 152** (Figure **1-3**)**.**

The supporting frame **15** may further comprise a base 154 to which the first **150** and the second sides **152** are attached and arranged to rest on a floor or other underlying support and support the rest of the device **1.**

The braking device **1** preferably comprises an actuating system arranged to vary the mutual position - for example angular- in space of the fourth gear wheel or other fourth shaped track **13** with respect to the first gear wheel or other fourth shaped track **7.**

This actuating system may comprise, for example:
- an actuating lever **17** arranged, for example, to rotate the gear wheel or other fourth shaped track **13** on itself and around the rotation axis **AR1;** and possibly
- an actuator **19,** such as a solenoid or pneumatic or hydraulic cylinder or other linear actuator arranged to operate the lever **17.**

For this purpose, the first gear wheel or other first shaped track **7** and the fourth gear wheel or other fourth shaped track **13** may be fixed integrally and respectively to the side **150** and the lever **17.**

Preferably the transmission ratio RT**2_1** between the second **9** and the first gear wheel **7** -or more generally between the second **9** and the first shaped track **7-** is equal to **1,** as is also the gear ratio RT**3_4** between the third **11** and the fourth gear wheel **13** -or more generally between the third **11** and the fourth shaped track **13.**

For this purpose, the diameter and/or number of teeth of the first gear wheel **7** is preferably equal to the diameter and/or number of teeth of the second gear wheel **9,** and the diameter and/or number of teeth of the third gear wheel **11** is preferably equal to the diameter and/or number of teeth of the fourth gear wheel **13.**

Possibly the second gear wheel **9** has a diameter or number of teeth different from the diameter or number of teeth of the third gear wheel **11** respectively.

Consider now:
- the ideal line joining the contact point PC_**7**_**9** between the teeth of the two gear wheels **7, 9** and the contact point PC_**11**_**13** between the teeth of the gear wheels **11**_**13**;
- the distance D_**7**_**9**, along this joining line, of the contact point PC_**7**_**9** and the rotation axis **AR1** of the main shaft; and
- the distance D_**11**_**13**, along this joining line, of the contact point PC_**11**_**13** and the rotation axis **AR1** of the main shaft.

Advantageously, the gear wheels **11, 13** that are kinematically closest to the lever **17** or other actuator activating the brake have a smaller diameter and/or number of teeth than the gear wheels **7, 9** kinematically closest to the main shaft **3** or other rotating element to be braked: thus the force exchanged between the gear wheels **11, 13** at the point PC_**11**_**13** has a more favourable lever arm than the force exchanged between the gear wheels **7, 9** at point PC_**7**_**9** reducing the torque that the lever **17** or other actuator must apply to the gear wheel **13** to brake the rotation of the main shaft **3.**

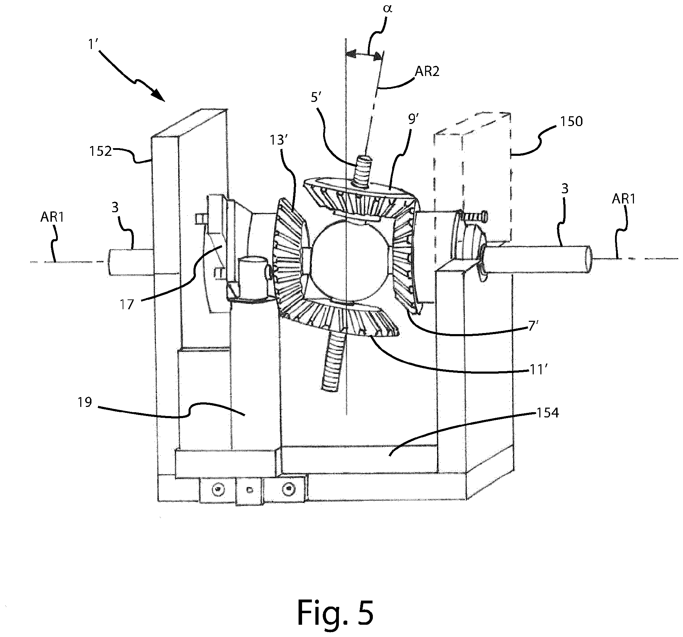

Figure **5** shows a braking device **1'** according to a second particular embodiment of the present invention.

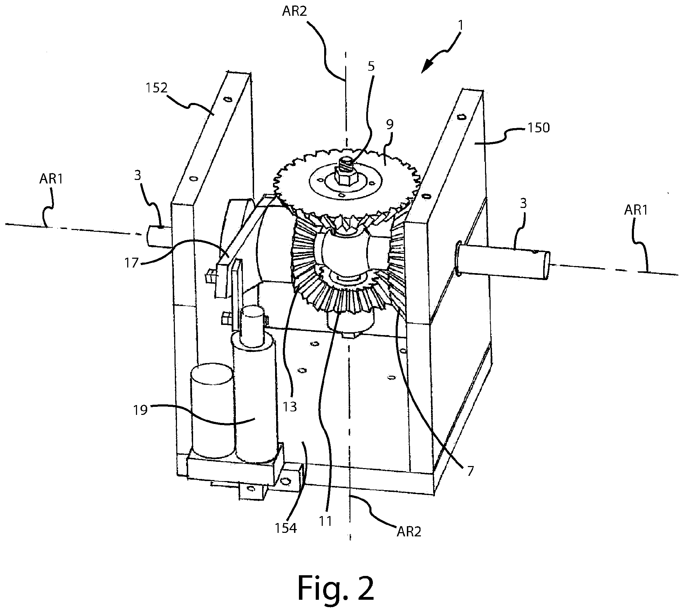

Unlike the braking device **1** of Figures **2-4** in which the secondary shaft **5** is substantially perpendicular to the main shaft **3,** in the braking device **1'** the secondary shaft **5'** is transverse and inclined, i.e. not substantially perpendicular to the main shaft **3',** and is for example inclined by an angle **α** [alpha] equal to about **10°,** for example between **3-20** degrees, or between **5-15** degrees or between **8-13** degrees.

This embodiment makes it possible to adopt gear wheels -or other types of shaped tracks- **7', 9', 11', 13'** with diameters that are equal to each other, in particular by adopting the diameter of the second gear wheel **9'** identical to that of the third gear wheel **11'.**

This embodiment makes it possible to adopt gear wheels -or other types of shaped tracks- **7', 9', 11', 13'** with particularly small diameters, for example a little more than the embodiment shown in Figure **1-4****,** thus reducing the inertia of such gear wheels and being particularly suitable for applications with high speeds.

By contrast the embodiment of Figure **1-4** is generally easier to implement.

An example of possible use and operation of the braking device **1** is now described.

One of the two ends of the main shaft **3** may be connected to a load to be braked, e.g. to the pulley of a winch or a flywheel, a drive torque applied to the drive shaft of a truck or to the wheel axle of a railway vehicle, such as a locomotive or a railway carriage.

In a minimum braking condition, the device **1** leaves the shaft **3** free to rotate, i.e. exerting a minimum braking action with almost zero self-consumption.

In such a minimum braking condition the first **7** and the fourth gear wheel **13** have such a mutual position in space -for example a mutual angular position, when they are mounted coaxial with each other and with the axis **AR1-** as to allow the gear wheels **7, 9, 11, 13** to mesh with each other and rotate on or against each other with the maximum possible clearance between the gears meshed against each other.

Supposing that the second **9** and the third gear wheel **11** are integrally fixed to the secondary shaft **5** so as to rotate on themselves around the secondary axis **AR2,** and are rigidly keyed to the secondary shaft **5** without being able to substantially rotate with respect to each other around the axis **AR2,** in the aforementioned minimum braking condition, when the main shaft **3** rotates on itself and around the axis **AR1** it also leads the secondary shaft **5** and consequently the second **9** and the third gear wheel **11** to rotate around the axis **AR1;** the second gear wheel **9** is meshed with the first gear wheel **7** and rotates freely on or against the latter; the third gear wheel **11** is meshed with the fourth gear wheel **13** and rotates freely on or against the latter.

Consequently, the second **9** and third gear wheel **11** each describe a motion of revolution around the main shaft **3** and the rotation axis **AR1.**

To begin braking, the fourth gear wheel **13** can be rotated on itself and around the axis **AR1,** moving it away from its position corresponding to the minimum braking condition.

Acting gradually the fourth gear wheel reduces the clearance between the toothed profiles of the wheels **7, 9, 11, 13** which mesh between themselves causing the third **11** and second gear wheel **9** to apply two pairs of opposite directions to the secondary shaft **5** until the friction between the gear wheels **7, 9** and that between the gear wheels **11, 13** is such as to prevent further rotation thereof or rolling on each other or whatever.

In the latter condition the gear wheels **9, 11** no longer being able to roll on or against the wheels **7** and **13** respectively, stop in particular the rotation of the secondary shaft **5** around the axis **AR1** consequently also stopping the rotation of the main axis **3** around the axis **AR1.**

In a similar way, the braking device **1'** of Figure **4** can be used and operate.

It follows from the above description that the braking device **1, 1'** is capable of very effectively braking the rotation of a shaft -in the previous description the main shaft **3-** while requiring very limited maintenance, being low-polluting -it can in fact release much smaller amounts of friction material particles than, for example, the well-known drum or disc brakes or it does not release any at all-, having a mean time between failures - MTBF- and being suitable for operation in deflagrating atmospheres -tending to concentrate less brake heat in a few hot spots and distribute it more evenly over larger areas than, for example, conventional drum or disc brakes.

The braking device **1, 1'** is in fact subject to relatively limited friction and wear, as they are typical of the gear wheels; such friction and wear can be further reduced by operating at least the toothed profiles or other shaped tracks **7, 9, 11, 13** in an oil bath.

Therefore, assuming that the device **1, 1'** is in a braking condition in **75**% of its useful life, the author of the present invention considers this useful life to be of the order of **30.000** hours.

The relatively long service life as well as high reliability, low risk of failure and equally low maintenance costs make the device **1, 1' very** cost-effective for many applications.

The braking device **1, 1'** also has a more constant braking efficiency over the brake operating life and as its wear progresses, which is a much appreciated quality; furthermore, it is also inherently more reliable than other types of brake, such as electromagnetic brakes.

The embodiments described above are susceptible to numerous modifications and variants, without departing from the scope of the present invention.

For example, the main shaft **3, 3',** the secondary shaft **5, 5',** the shaped tracks **7, 7'; 9, 9', 11, 11'; 13, 13'** and the supporting frame **15** may be made of metal materials -such as steel- or of appropriate plastics.

The actuating lever **17** and the linear actuator **19** may be replaced, place side-by-side or combined with appropriate rotary actuators.

Every reference in this description to "an embodiment", "an example of embodiment" means that a particular characteristic or structure described in relation to such embodiment is comprised in at least one embodiment of the invention and in particular in a particular variant of the invention as defined in a main claim.

The fact that such expressions appear in various passages of the description does not imply that they are necessarily referred solely to the same embodiment.

In addition, when a feature, element or structure is described in relation to a particular embodiment, it is observed that it is within the competence of the person skilled in the art to apply such feature, element or structure to other embodiments.

Numerical references which only differ in terms of different superscripts **21'**, **21"**, **21**^{III} unless specified otherwise indicate different variants of an element with the same name.

Furthermore, all of the details can be replaced by technically equivalent elements.

In practice, the materials used, as well as the dimensions thereof, can be of any type according to the technical requirements.

It must be understood that an expression of the type "A *comprises* B, C, D" or "A *is formed by* B, C, D" also comprises and describes the particular case in which "A *consists of* B, C, D".

The expression *"A comprises a B element"* unless otherwise specified is to be understood as *"A comprises one or more elements B".*

References to a "first, second, third, ... n-th entity" have the sole purpose of distinguishing them from each other but the indication of the n-th entity does not necessarily imply the existence of the first, second ... (n-**1**)th entity.

The examples and lists of possible variants of the present application are to be construed as non-exhaustive lists.

## Claims

1. Braking device (**1, 1'**) comprising a main shaft (**3, 3'**), a secondary shaft (**5, 5'**), at least a first (**7, 7'**), a second (**9, 9'**), a third (**11, 11'**) and a fourth shaped track (**13, 13'**) and possible further shaped tracks, and wherein:
- the main shaft (**3, 3'**) is arranged to rotate on itself around a main rotation axis (**AR1**);
- the secondary shaft (**5, 5'**) is arranged to rotate on itself around a secondary rotation axis (**AR2**) substantially perpendicular or however transverse to the main rotation axis (**AR1**), and to rotate around the main rotation axis (**AR1**);
- the second (**9**) and/or the third shaped track (**11**) are integrally fixed to the secondary shaft (**5**) so as to rotate on themselves around the secondary rotation axis (**AR2**) ;
- the first shaped track (**7**) is arranged to operate the second shaped track (**9**);
- the third shaped track (**11**) is arranged to operate the fourth shaped track (**13**);
- at least one pair of said shaped tracks are arranged to roll on or against each other;
- the fourth shaped track (**13, 13'**) is arranged to vary its position with respect to the first shaped track (**7, 7'**) so as to slow down and/or hinder the rotation and/or the rolling of said at least one pair of said shaped tracks on or against each other.

2. Braking device (**1, 1'**) according to claim **1,** wherein the fourth shaped track (**13, 13'**) is arranged to vary its position with respect to the first shaped track (**7, 7'**) so as to slow down and/or hinder the rotation/the rolling of the first shaped track (**7, 7'**) with respect to the second shaped track (**9, 9'**) and/or the rotation and/or the rolling of the third shaped track (**11, 11'**) with respect to the fourth shaped track (**13, 13'**).

3. Braking device (**1, 1'**) according to claim **1** or **2**, wherein the fourth shaped track (**13, 13'**) is arranged to vary at least its angular position with respect to the first shaped track (**7, 7'**) so as to slow down and/or hinder the rotation and/or the rolling of said at least one pair of said shaped tracks on or against each other.

4. Braking device (**1, 1'**) according to claim **3**, wherein the fourth shaped track (**13, 13'**) is arranged to vary at least its angular position with respect to the first shaped track (**7, 7'**) by rotating on itself at least in relation to the first shaped track (**7, 7'**) and possibly also around the main rotation axis (**AR1**).

5. Braking device (**1, 1'**) according to one or more preceding claims, wherein the second (**9**) and/or the third shaped track (**11**) are integrally fixed to the secondary shaft (**5**) so as to rotate on themselves around the secondary rotation axis (**AR2**).

6. Braking device (**1**, **1'**) according to one or more preceding claims, wherein the secondary shaft (**5**, **5'**) is arranged to rotate on itself around a secondary rotation axis (**AR2**) substantially perpendicular to the main rotation axis (**AR1**).

7. Braking device (**1, 1'**) according to one or more preceding claims, wherein at least two of said shaped tracks comprise a gear wheel for example with a bevel toothing.

8. Braking device (**1, 1'**) according to one or more preceding claims, wherein at least the first (**7, 7'**), the second (**9, 9'**), the third (**11, 11'**) and the fourth shaped track (**13, 13'**) each comprise a gear wheel.

9. Braking device (**1, 1'**) according to one or more preceding claims, wherein the first (**7, 7'**) and/or the fourth shaped track (**13, 13'**) are coaxial with the main shaft (**3, 3'**) and arranged to rotate on themselves with respect to the main rotation axis (**AR1**) and around the main rotation axis (**AR1**).

10. Braking device (**1**, **1**') according to one or more preceding claims, wherein the secondary shaft (**5**, **5**') is arranged to rotate on itself around a secondary rotation axis (**AR2**) substantially transverse to the main rotation axis (**AR1**) and having an inclination (**α**) with respect to the main rotation axis (**AR1**) equal to or greater than **5** degrees.

11. Braking device (**1**, **1**') at least according to claim **8**, wherein:
- the first gear wheel (**7**) is meshed with the second gear wheel (**9**) and arranged to roll on or against it; and
- the third gear wheel (**11**) is meshed with the fourth gear wheel (**13**) and arranged to roll on or against it.

12. Braking process comprising the following operations:
- providing a braking device (**1, 1'**) having the features according to one or more preceding claims;
- rotating the main shaft (**3, 3'**) on itself and around the main rotation axis (**AR1**);
- varying the position in the space of the fourth shaped track (**13, 13'**) with respect to the first shaped track (**7, 7'**) so as to brake and possibly block the rotation and/or the rolling of said at least one pair of said shaped tracks on or against each other.
